# EUROPEAN PATENT SPECIFICATION

(11) **EP 2 832 587 B1**
(45) Date of publication and mention of the grant of the patent: **30.03.2016**
(21) Application number: 14178008.0
(22) Date of filing: 22.07.2014
(51) Int. Cl.: B60R 7/04, B60N 2/28

(54) **A child car seat with tensioning means of a car seat belt for constraining the child seat to the car seat**
Fahrzeug-Kindersitz mit einer Spannvorrichtung für den Sicherheitsgurt des Fahrzeuges zum Halten des Kindersitzes am Fahrzeugsitz
Siège enfant avec tensionneur de la ceinture de sécurité d'un siège de véhicule automobile pour retenir ledit siège enfant

(30) Priority: 31.07.2013 IT MI20131282
(43) Date of publication of application: 04.02.2015
(73) Proprietor: Artsana S.p.A., 22070 Grandate (CO) (IT)
(72) Inventor: Damiani, Osvaldo, 22070 Grandate (CO) (IT); Merli, Gianluca, 22070 Grandate (CO) (IT); Mascarella, Giuseppe, 22070 Grandate (CO) (IT)
(74) Representative: Perani, Aurelio

(56) References cited:
- EP-A1- 0 609 890
- EP-A2- 1 493 617
- WO-A1-2004/033251
- NL-C1- 1 023 933
- US-A- 5 839 789
- US-A1- 2005 253 431

## Description

The present invention relates to a child car seat as defined in the preamble of the main claim (see, for example, EP 0 609 890 A1).

Child car seats are known, which have a support adapted to rest on a seat of the vehicle, with a child containment portion joined thereto. This portion has a seating surface, armrests and a backrests, for receiving the child. The support and the containment portion may either form one piece or be distinct, connected parts.

The support has in turn a base which directly rests upon a cushion of the seat and a backrest which rests on the backrest of the seat.

Child car seats may be fastened to the seat by known ISOFIX attachments or using the safety belt of the car seat. The latter type of child seats is coupled to the safety belt by having the latter pass through recesses and guides as usually associated with the support structure.

Car child seats are also known, whose support structure has belt tensioner means adapted to tension the belt once the latter has been introduced into the guides of the support structure and has been fastened to the usual anchor provided on the seat or adjacent to it. These tensioner means comprise a lever for moving, through a plurality transmissions and springs, movable elements associated with a base of said support structure and holding seat belt guides. Furthermore, two spaced clip members are provided on a backrest of such structure, for holding the belt in such position. Nevertheless, these known child seats comprise a plurality of elements which are designed to be mutually coupled, fastened to the support structure and inserted into appropriate supports or guides thereof, for optimized arrangement and proper operation of the tensioner means.

The object of the present invention is to provide an improved child car seat as compared with the prior art.

Particularly, the object of the invention is to provide a child seat as mentioned above that has a limited number of parts, can be easily assembled and has a low cost, while affording greater reliability than the prior art.

These and other objects, that will be apparent to the skilled person, are fulfilled by a child car seat as defined in the said main claim (1); additional features of the invention are disclosed in the dependent claims.

The present invention will be better understood with reference to the accompanying drawings, which are given by way of example and without limitation, in which:
Figure 1 shows a side view of a child car seat obtained according to the invention;
Figure 2 shows a top view of the child seat of Figure 1, with certain parts omitted for clarity;
Figure 3 shows a perspective view of a portion of the child seat of Figure 1 in its first work position;
Figure 4 shows a perspective view of the portion of Figure 3, in its second work position;
Figure 5 shows a top view of the portion of Figure 3, in its first work position;
Figure 6 shows a top view of the portion of Figure 3, in its second work position;

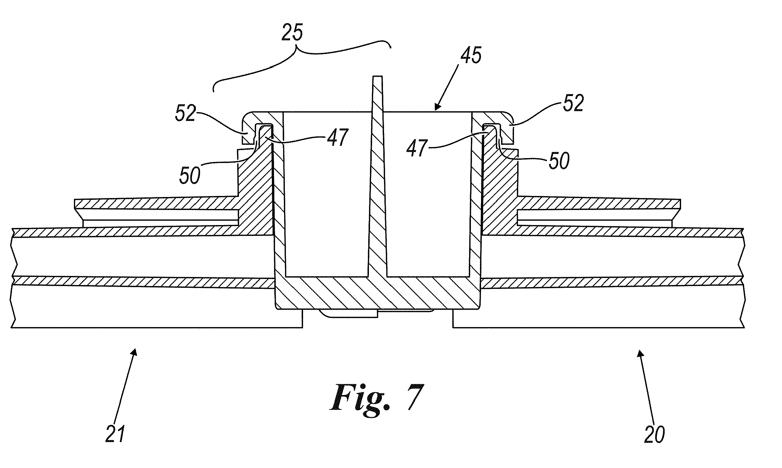

Figure 7 shows a cross section taken along line 7-7 of Figure 5.

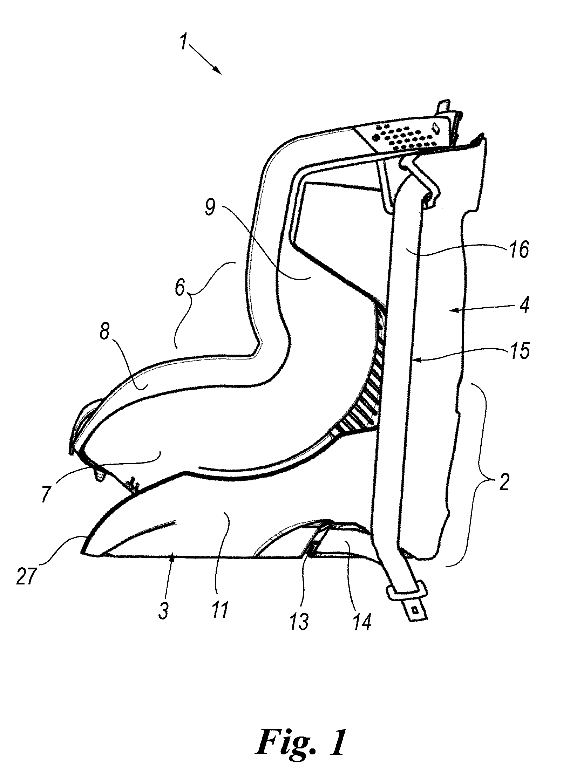

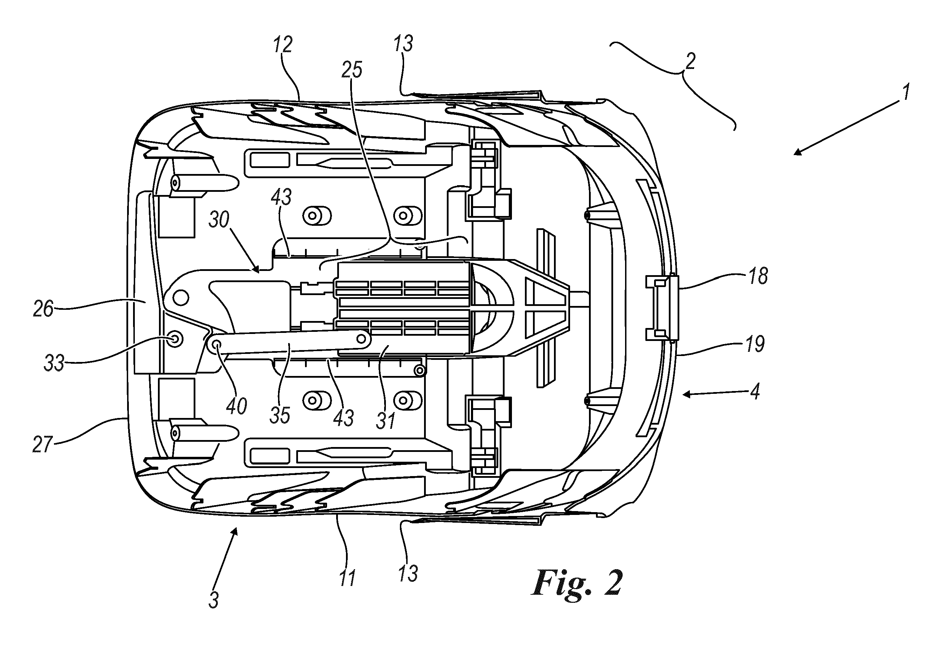

The above figures show a child car seat 1 (see Figures 1 and 2) of the type that comprises a support 2 adapted to rest on a vehicle seat and having a base 3 (resting on the seat) and a backrest 4 (resting against the seat backrest). In the case of the child seat 1 as shown in the figures, the support 2 has a child containment portion 6, with a seating surface 7, armrests 8 and a backrest 9, associated therewith in movable fashion for tilt adjustment. The portion 6 is associated with the support 2 in any known manner, that will not be further described herein.

Apertures 13 are formed in opposed sides 11 and 12 of the base 2, for receiving a lap portion 14 of a safety belt 15, whose back portion 16 is associated with the backrest 4 of the support 2 by a clip 18 of known type, disposed at a middle portion of the upper side 19 of the backrest.

Portions 20 and 21 are placed in the base 3, proximate the apertures 13 of the sides 11 and 12, and have a passageway 22 therein for the belt; such portions 20 and 21 are separate and adapted to be moved toward and away from the sides 11 and 12 of such base by a translating control body 25 disposed along a median plane W of the base and associated with a lever 26 (or an equivalent actuator member) located at a free end 27 of the base 3 away from the backrest 4.

This translating body 25 is particularly placed on a guide and support base portion 30 attached to the base 3, upon which a movable portion 31 of such body (having lightening apertures in this embodiment) slides; it slides on guides 32 formed in the guide base 30 under the action of a rod 35 that is joined to a body 36 associated with the lever 26. This body is hinged to the guide base 30 through a pin 33 (defining the hinge between the base and the body 36) which is offset from the above mentioned median axis or plane W; the above mentioned body and lever pivot about such pin and such pivotal motion moves the rod 35 and hence the body 25 on the base 30 along such axis or plane W.

It shall be noted that the body has a curvilinear part 38 having the rod 35 hingedly connected thereto at 40, said curvilinear part 38 rotating along a shoulder 41 with a curvilinear edge 42 when the lever 26 and the body 36 pivot about the pin 33.

The lever 26 is free to pivot about the pin 33 when the belt is inserted in the passageways 22. Only when the belt is inserted therein is a force created (due to the forward motion of the body 25) that holds the lever 26 in the closing position (because the pivot point of the lever is offset from the force component that presses upon the belt).

The body 25 moves between lateral shoulders 43 raising from the guide base 30 and has a wedge or wedge-shaped end 45 at the end of the movable portion 31, which is coupled to raised edges 47 associated with the portions 20 and 21; these edges delimit a wedge passage 49 between said portions in which the end 45 of the body 25 moves when pushed by the rod 35 moved by the lever 26. As this end 45 is inserted in the passage 49, the portions 20 and 21 are moved away from each other (i.e. transverse and perpendicular to the body 25), whereas as such end comes out (at least partially) from such passage, said portions are moved toward each other. This occurs because the ridges 47 of the latter cooperate with passageways 50 on the sides of the wedge end 45 defined at C-folded upper side edges 52 thereof.

The wedge end 45 is raised from the movable portion 31 of the area 55 of the body 25 sliding along the shoulders 43 of the base 30. The lap portion 14 of the safety belt 15 is placed at a transition zone 57 between the end 45 and the portion 31, such that, as the body 25 moves toward the parts 20 and 21 and between them, a thrust is applied to the above mentioned belt 15.

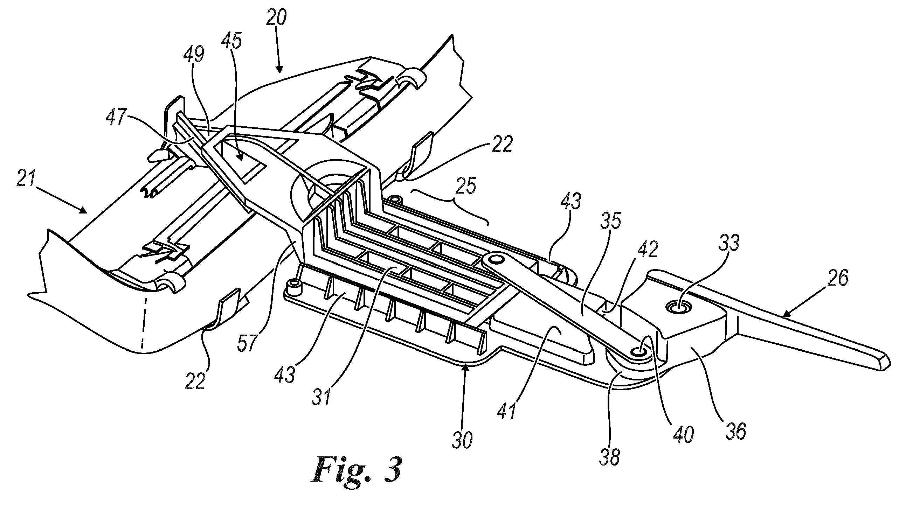

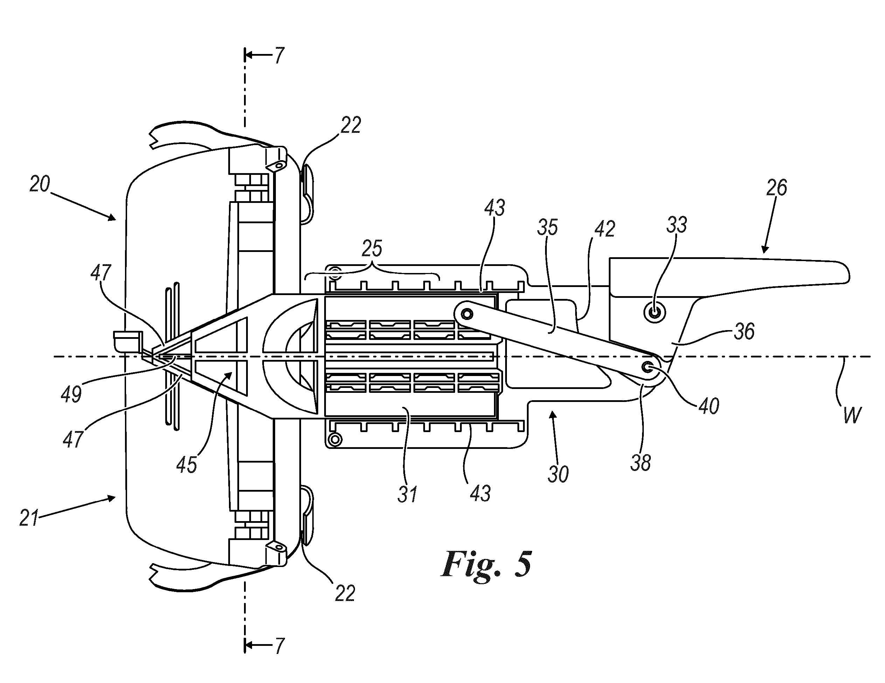

Assume now that the above described child car seat 1 is used, with the tensioner body 25 in the positions of Figures 3 and 5. First, the lap portion 14 of the belt 15 is passed below its base 3 and is placed in front of the transition zone 57 of the body 25; then, such lap portion is inserted into the apertures 13 in the sides 11 and 12 of such base and into the passageways 22 of the above mentioned portions 20 and 21.

A usual buckle 60 of the belt 15 is introduced into an anchor member associated in usual fashion with the vehicle seat (and not shown), and the back portion 16 of the belt 16 is placed within the clip 18 and locked therein.

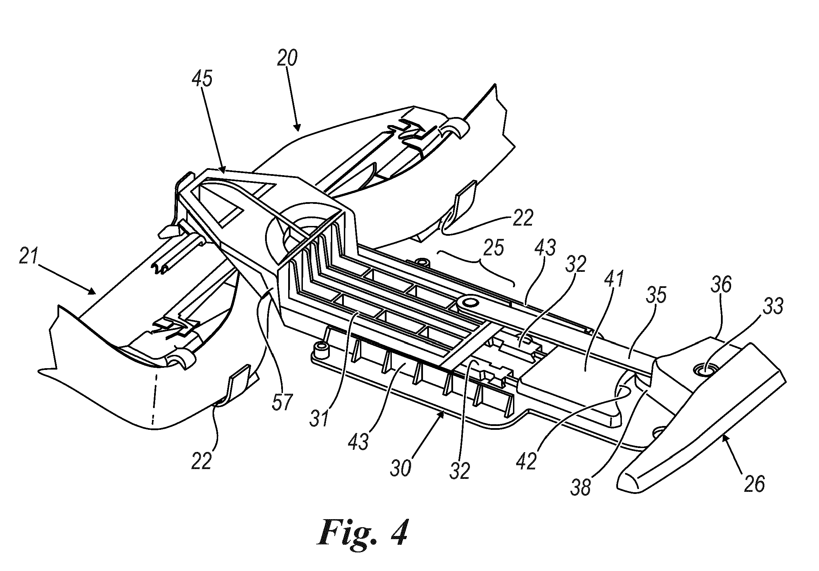

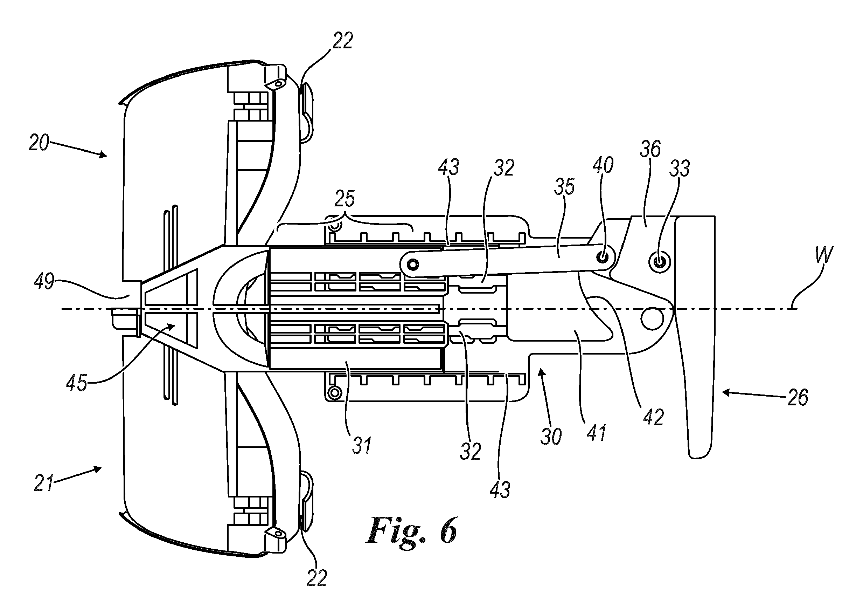

Then the lever 26 is actuated, i.e. pushed toward the base 3 from its first work position (Figures 3 and 5) to its second work position (Figures 4 and 6). Thus, the rod 35 pushes the translating body 25 toward the portions 20 and 21 and its wedge end 45 penetrates between them and moves them apart.

As a result, these portions move apart from each other and the belt in front of the transition zone 57 is pressed toward the above mentioned portions, thereby tensioning the safety belt and firmly locking the child seat on the vehicle seat.

As the lever 26 is moved away from the base 3 of the support 2, a pull force is exerted on the rod 35 and hence on the body 25. Therefore, the latter comes out of the wedge passage 49 between the portions 20 and 21, and drives the latter (portions) toward each other. As a result, the transition zone 57 of the body 25 moves apart from the belt 15 which loosens as the portions 20 and 21 are moved toward each other.

Therefore, the above described arrangement concerns a child seat comprising safety belt coupling and tensioning means associated with its base, such means including a translating body which exerts a wedge action on movable portions 20 and 21 connected to the belt to drive them away from each other, while pressing upon the belt to tension it. This arrangement has a simple construction and a small number of parts, thereby providing greater reliability and reduced costs as compared with the prior art.

A particular embodiment of the invention has been described above. However, other embodiments may be envisaged from the above description, such as the embodiment in which the child seat 1 comprises a single structure also defining the child containment portion, with the above mentioned coupling and tensioning means inserted in its base. This alternative arrangement also falls within the scope of the appended claims.

## Claims

1. A child car seat (1) comprising a support (2) adapted to rest on a vehicle seat, said support (2) having a base (3) **adapted for** resting on a cushion of the **vehicle** seat and a backrest (4) adapted to rest against a **vehicle** seat backrest, in said base (3) being provided coupling and tensioning means **for** a seat belt (15) of the car adapted to constrain the child seat (1) to said seat, said means being controlled by an actuator (26), the backrest (4) of the support (2) having hooking means (18) **for** said belt, **characterized in that** the coupling and tensioning means comprise a translating body (25) having a wedge-shaped end (45) adapted to slide within a wedge cavity (49) present between two opposed and sliding portions (20, 21) of said base, said portions being movable transversely and perpendicularly to the translating body (25) when the wedge-shaped end (45) of the latter penetrates the abovementioned wedge cavity (49), said translating body (25) being **suitable for being** arranged orthogonally to said seat belt (15) and **for** pressing thereon in its movement towards the above cited wedge cavity (49), the seat belt being **insertable** in a passage (22) of each sliding portion (20, 21), the abovementioned movement towards said wedge cavity (49) of said translating body **being suitable for causing the** tensioning **of** said belt for both direct action thereon and for the separation movement of said portions (20, 21) consequent to that of said translating body.

2. The child seat as claimed in claim 1, **characterized in that** the translating body (25) is arranged along a median plane (W) of the base (3) of the support (2) of the child seat (1), said body being associated to the actuator (26) located at a free end (27) of said base (3) and accessible from the outside of the latter.

3. The child seat as claimed in claim 2, **characterized in that** the translating body (25) lies on a guide base (30) associated with the base (3) of the support (2) of the child seat and having guides (33, 43) for the sliding of said body (25), when subject to the action of the actuator (26), the latter being a lever hinged to said base (30) by way of a hinge pin (33) eccentric with respect to said median plane (W).

4. The child seat as claimed in claim 3, **characterized in that** said lever (26) is integral with a body (36) hinged in the abovementioned hinge pin (33) to the base (30) cited above, said body being in turn hinged to a rod (35) connected to said translating body (25), the body having a curved portion (38) movable along a shoulder (41) of said base (30).

5. The child seat as claimed in claim 3, **characterized in that** said translating body (25) has a movable portion (31) slidable on said guide base (30) having **said** wedge or wedge-shaped end (45), the latter being raised with respect to said movable portion (31), between said portion and said wedge end (45) being present a transition zone (57) contrasting on the seat belt (15).

6. The child seat as claimed in claim 1, **characterized in that** said wedge end (45) is slidably coupled to the sliding portions (20, 21).

7. The child seat as claimed in claim 6, **characterized in that** the wedge end (45) comprises passages (50) on its sides, in proximity of its C-folded upper side edges (52), in which projecting edges (47) slide, associated with the abovementioned portions (20, 21).

8. The child seat as claimed in claim 1, **characterized in that** to said support (2) a child containment portion (6) is associated movable with respect to said support.

9. The child seat as claimed in claim 1, **characterized in that** said support (2) is adapted to contain the child directly.

## Patentansprüche

1. Kindersitz (1), umfassend eine Auflage (2), die dazu geeignet ist, auf einem Fahrzeugsitz aufzuliegen, wobei die Auflage (2) ein Unterteil (3) aufweist, das dazu geeignet ist, auf einem Polster des Fahrzeugsitzes aufzuliegen, und eine Rückenlehne (4), die dazu geeignet ist, an der Rückenlehne eines Fahrzeugsitzes anzuliegen, wobei im Unterteil (3) Verbindungs- und Spannmittel für einen Sitzgurt (15) des Fahrzeugs vorgesehen sind, um den Kindersitz (1) auf dem Sitz zu halten, wobei die Mittel durch einen Aktor (26) gesteuert werden, wobei die Rückenlehne (4) der Auflage (2) Hakenmittel (18) für den Gurt aufweist, **dadurch gekennzeichnet, dass** die Verbindungs- und Spannmittel einen Translationskörper (25) mit einem keilförmigen Ende (45) umfassen, der dazu geeignet ist, in einen zwischen zwei gegenüberliegenden Gleitabschnitten (20, 21) des Unterteils befindlichen Keilraum (49) zu gleiten, wobei die Abschnitte transversal und perpendikular zum Translationskörper (25) beweglich sind, wenn das keilförmige Ende (45) des Letzteren in den vorgenannten Keilraum (49) eindringt, wobei der Translationskörper (25) geeignet ist, orthogonal zum Sitzgurt (15) angeordnet und hierauf bei seiner Bewegung in Richtung des Keilraums (49) gedrückt zu werden, wobei der Sitzgurt in einen Durchgang (22) eines jeden Gleitabschnitts (20, 21) einsetzbar ist, wobei die vorgenannte Bewegung zum Keilraum (49) des Translationskörpers geeignet ist, das Spannen des Gurts sowohl zur direkten Betätigung desselben als auch zur Trennungsbewegung der Anteile (20, 21) infolge der des Translationskörpers zu veranlassen.

2. Kindersitz nach Anspruch 1, **dadurch gekennzeichnet, dass** der Translationskörper (25) längs einer Medianebene (W) des Unterteils (3) der Auflage (2) des Kindersitzes (1) angeordnet ist, wobei der Körper mit dem Aktor (26) verbunden ist, der an einem freien Ende (27) des Unterteils (3) angeordnet und von außerhalb des Letzteren zugänglich ist.

3. Kindersitz nach Anspruch 2, **dadurch gekennzeichnet, dass** der Translationskörper (25) auf einer Führungsbasis (30) liegt, die mit dem Unterteil (3) der Auflage (2) des Kindersitzes verbunden ist und Führungen (33, 43) für das Gleiten des Körpers (25) aufweist, wenn sie der Wirkung des Aktors (26) ausgesetzt ist, wobei Letzterer einen Hebel ist, der an der Basis (30) durch einen bezogen auf die Medianebene (W) exzentrischen Scharnierstift (33) angelenkt ist.

4. Kindersitz nach Anspruch 3, **dadurch gekennzeichnet, dass** der Hebel (26) einstückig mit einem Körper (36) ausgeführt ist, der an dem vorgenannten Scharnierstift (33) an der Basis (30) angelenkt ist, wobei der Körper seinerseits an einer Stange (35) angelenkt ist, die mit dem Translationskörper (25) verbunden ist, wobei der Körper einen gekrümmten Abschnitt (38) aufweist, der längs einer Schulter (41) der Basis (30) bewegbar ist.

5. Kindersitz nach Anspruch 3, **dadurch gekennzeichnet, dass** der Translationskörper (25) einen bewegbaren Abschnitt (31) aufweist, der auf der Führungsbasis (30) mit dem Keil oder dem keilförmigen Ende (45) gleitbar ist, wobei Letzteres bezogen auf den bewegbaren Abschnitt (31) erhöht ist, wobei zwischen dem Abschnitt und dem keilförmigen Ende (45) einen dem Sitzgurt (15) gegenüberliegenden Übergangsbereich (57) vorhanden ist.

6. Kindersitz nach Anspruch 1, **dadurch gekennzeichnet, dass** das keilförmige Ende (45) gleitbar mit den Gleitabschnitten (20, 21) verbunden ist.

7. Kindersitz nach Anspruch 6, **dadurch gekennzeichnet, dass** das keilförmige Ende (45) Durchgänge (50) auf seinen Seiten, in der Nähe seiner C-gefalteten, oberen Seitenkanten (52) umfasst, in denen auskragende Kanten (47) gleiten, die mit den Abschnitten (20, 21) verbunden sind.

8. Kindersitz nach Anspruch 1, **dadurch gekennzeichnet, dass** mit der Auflage (2) ein Kind-Aufnahmeabschnitt (6) bewegbar bezogen auf die Auflage verbunden ist.

9. Kindersitz nach Anspruch 1, **dadurch gekennzeichnet, dass** die Auflage (2) dazu geeignet ist, das Kind direkt aufzunehmen.

## Revendications

1. Siège auto pour enfants (1) comprenant un support (2) adapté pour reposer sur un siège de véhicule, ledit support (2) comprenant une base (3) adaptée pour reposer sur un coussin du siège de véhicule et un dossier (4) adapté pour reposer contre un dossier de siège de véhicule, dans ladite base (3) étant disposés des moyens d'accouplement et de tension pour une ceinture de sécurité (15) de la voiture adaptée pour fixer le siège pour enfants (1) audit siège, lesdits moyens étant commandés par un actionneur (26), le dossier (4) du support (2) comportant des moyens d'accrochage (18) pour ladite ceinture, **caractérisé en ce que** les moyens d'accouplement et de tension comprennent un corps de translation (25) ayant une extrémité en forme de coin (45) adaptée pour coulisser à l'intérieur d'une cavité en forme de coin (49) présente entre deux portions coulissantes et opposées (20, 21) de ladite base, lesdites portions étant mobiles transversalement et perpendiculairement au corps de translation (25) quand l'extrémité en forme de coin (45) de celui-ci pénètre dans la cavité en forme de coin précitée (49), ledit corps de translation (25) étant adapté pour être agencé orthogonalement par rapport à ladite ceinture de sécurité (15) et pour presser dessus dans son mouvement vers la cavité en forme de coin précitée (49), la ceinture de sécurité pouvant être insérée dans un passage (22) de chaque portion coulissante (20, 21), le mouvement précité vers ladite cavité en forme de coin (49) dudit corps de translation étant adapté pour provoquer la tension de ladite ceinture à la fois par une action directe sur celle-ci et par le mouvement de séparation desdites portions (20, 21) résultant de celui dudit corps de translation.

2. Siège pour enfants selon la revendication 1, **caractérisé en ce que** le corps de translation (25) est agencé suivant un plan médian (W) de la base (3) du support (2) du siège pour enfants (1), ledit corps étant associé à l'actionneur (26) situé à une extrémité libre (27) de ladite base (3) et accessible de l'extérieure de celle-ci.

3. Siège pour enfants selon la revendication 2, **caractérisé en ce que** le corps de translation (25) se situe sur une base formant guide (30) associée à la base (3) du support (2) du siège pour enfants et ayant des guides (33, 43) pour le coulissement dudit corps (25), quand il est soumis à l'action de l'actionneur (26), ce dernier étant un levier articulé sur ladite base (30) au moyen d'un axe d'articulation (33) excentrique par rapport audit plan médian (W).

4. Siège pour enfants selon la revendication 3, **caractérisé en ce que** ledit levier (26) est solidaire d'un corps (36) articulé dans l'axe d'articulation précité (33) à la base (30) précitée, ledit corps étant articulé à son tour sur une tige (35) connectée audit corps de translation (25), le corps ayant une portion courbe (38) mobile le long d'un épaulement (41) de ladite base (30).

5. Siège pour enfants selon la revendication 3, **caractérisé en ce que** ledit corps de translation (25) a une portion mobile (31) coulissant sur ladite base formant guide (30), ayant ladite extrémité en forme de coin ou en biseau (45), cette dernière étant soulevée par rapport à ladite portion mobile (31), une zone de transition (57) faisant contraste sur la ceinture de sécurité (15) étant présente entre ladite portion et ladite extrémité en forme de coin (45).

6. Siège pour enfants selon la revendication 1, **caractérisé en ce que** ladite extrémité en forme de coin (45) est couplée de manière coulissante aux portions coulissantes (20, 21).

7. Siège pour enfants selon la revendication 6, **caractérisé en ce que** l'extrémité en forme de coin (45) comprend des passages (50) sur ses côtés, à proximité de ses bords latéraux supérieurs plié en forme de C (52), dans lesquels coulissent des bords en saillie (47) associés aux portions précitées (20, 21).

8. Siège pour enfants selon la revendication 1, **caractérisé en ce qu'**une portion de réception de l'enfant (6) est associée audit support (2), mobile par rapport audit support.

9. Siège pour enfants selon la revendication 1, **caractérisé en ce que** ledit support (2) est adapté pour contenir directement l'enfant.
